(19) Europäisches Patentamt
European Patent Office
Office européen des brevets

(11) **EP 2 678 207 B1**

(12) **EUROPÄISCHE PATENTSCHRIFT**

(45) Veröffentlichungstag und Bekanntmachung des Hinweises auf die Patenterteilung:
**24.01.2018 Patentblatt 2018/04**

(21) Anmeldenummer: **12708790.6**

(22) Anmeldetag: **15.02.2012**

(51) Int Cl.:
**B60W 40/12** *(2012.01)*    **B60W 50/00** *(2006.01)*
**B60W 30/04** *(2006.01)*

(86) Internationale Anmeldenummer:
**PCT/EP2012/052615**

(87) Internationale Veröffentlichungsnummer:
**WO 2012/113691 (30.08.2012 Gazette 2012/35)**

(54) **VERFAHREN UND VORRICHTUNG ZUR BESTIMMUNG DER SCHRÄGLAGE EINES FAHRZEUGS**

METHOD AND DEVICE FOR DETERMINING THE INCLINED POSITION OF A VEHICLE

PROCÉDÉ ET DISPOSITIF DE DÉTERMINATION DE LA POSITION INCLINÉE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.02.2011 DE 102011004587**

(43) Veröffentlichungstag der Anmeldung:
**01.01.2014 Patentblatt 2014/01**

(73) Patentinhaber: **Robert Bosch GmbH**
**70442 Stuttgart (DE)**

(72) Erfinder: **LEMEJDA, Markus**
**71642 Ludwigsburg (DE)**

(56) Entgegenhaltungen:
| | |
|---|---|
| **AT-A1- 505 363** | **DE-A1-102005 012 456** |
| **DE-A1-102005 012 458** | **DE-A1-102006 018 978** |
| **US-A- 6 121 873** | **US-A1- 2005 216 146** |

**Beschreibung**

Stand der Technik

Die Erfindung betrifft ein Verfahren zur Bestimmung der Schräglage eines Fahrzeugs, insbesondere eines Kraftfahrzeugs, und eine Vorrichtung zur Durchführung des Verfahrens.

Die Schräglage eines Fahrzeugs wird in der Regel durch den Wankwinkel $\varphi$ beschrieben. Aus dem Stand der Technik ist es bekannt, mit Hilfe eines Wankratensensors zunächst die Wankrate W des Fahrzeugs zu messen und den Wankwinkel $\varphi$ über eine anschließende Integration der Wankrate zu bestimmen. Der so bestimmte Wert stellt aber nur einen Betrag $\Delta\varphi$ dar, um den sich der Wankwinkel während der Integrationsphase verändert hat. Der Startwert $\varphi_0$ zu Beginn der Integration (Offset) ist dagegen nicht bekannt. Der berechnete Wankwinkel $\varphi$ hat daher einen Offset-Fehler. Zusätzlich summieren sich, da jeweils Änderungen des Wankwinkels zum aktuellen Wert addiert werden, alle auftretenden Fehler. Die Wankrate ist somit nicht langzeitstabil. Eine brauchbare Bestimmung des Wankwinkels $\varphi$ nach gängigen Verfahren erfordert deshalb eine weitere Methode zur Wankwinkelbestimmung, z. B. einen modellbasierten Ansatz unter Verwendung der Gierrate und der Fahrzeuglängsgeschwindigkeit, um damit den Offset-Fehler zu kompensieren.

Üblicherweise werden zur Bestimmung des Wankwinkels $\varphi$ sowohl ein Wankraten- als auch ein Gierratensensor eingesetzt. Der Wankwinkel $\varphi$ wird dann einerseits gemäß der bereits erwähnten Integrationsmethode bestimmt und andererseits unter Berücksichtigung der Gierrate modellbasiert berechnet. Beide Methoden zur Bestimmung des Wankwinkels $\varphi$ haben jedoch gewisse Einschränkungen in ihrer Genauigkeit. Der von einem Fahrzeugsystem letztlich verwendete Wankwinkel $\varphi$ wird daher durch Kombination beider Methoden ermittelt. Dieses Verfahren zur Bestimmung des Wankwinkels $\varphi$ erfordert zwei Drehratensensoren und ist daher relativ aufwändig.

Aus der DE 10 2005 012 456 A1 sind ein System und ein Verfahren zur Einschätzung eines Fahrzeugzustands bekannt. Das System umfasst mindestens zwei Sensoren, die am Fahrzeug montiert sind. Die Sensoren erzeugen Signale über die gemessenen Fahrzeugzustände, welche der Fahrzeugdynamik entsprechen. Der Signalregler überträgt die gemessenen Zustandsdaten des Fahrzeugs von einem Sensor-Koordinatensystem an ein Fahrzeug-Koordinatensystem, das dem Fahrzeug zugewiesen ist. Ein Filter empfängt die umgewandelten gemessenen Fahrzeugzustände vom Signalregler und verarbeitet die gemessenen Signale in Zustandsschätzungen des Fahrzeugs, wie z.B. die Quergeschwindigkeit, die Gierrate, den Kippwinkel und die Neigungsrate des Fahrzeugs.

Ein aus der DE 10 2005 012 458 A1 bekanntes System und Verfahren schützen ein Kraftfahrzeug gegen Überschlagen durch Einsatz einer Reihe von linearen Beschleunigungssensoren. Ein Steuermodul umfasst unter anderem ein Fahrzeugdynamikmodell und ein Modell der Sensoranordnung. Ein Zustandsvektor wird auf der Basis de festgestellten Beschleunigungen, des Fahrzeugdynamikmodells und des Sensormodells ermittelt. Auf der Basis des Zustandsvektors wird ein Regelsignal erzeugt und das Wankmoment des Fahrzeugs wird auf der Basis dieses Regelsignals reduziert.

Die Merkmale der Oberbegriffe der unabhängigen Ansprüche sind der DE 10 2005 012 456 entnommen.

Offenbarung der Erfindung

Es ist daher Aufgabe der vorliegenden Erfindung, ein Verfahren und eine Vorrichtung zu schaffen, mit dem bzw. der die Bestimmung der Schräglage eines Fahrzeugs auf einfachere Weise durchgeführt werden kann.

Gelöst wird diese Aufgabe gemäß der Erfindung durch die in den unabhängigen Ansprüchen genannten Merkmale. Weitere Ausgestaltungen der Erfindung sind Gegenstand von Unteransprüchen.

Gemäß der Erfindung wird vorgeschlagen, mittels eines Drehratensensors, dessen Messachse gegenüber der Längsachse des Fahrzeugs um einen Nickwinkel $\beta$ geneigt ist, eine Drehrate $\omega$ zu erfassen, die einen Wankraten- und einen Gierratenanteil aufweist. Der Wankwinkel $\varphi$ wird schließlich aus dem Drehratensignal berechnet. Dies hat den Vorteil, dass nur ein einziger Drehratensensor erforderlich ist und die Bestimmung des Wankwinkels $\varphi$ einfach und kostengünstig durchgeführt werden kann.

Die Messachse des Sensors liegt vorzugsweise in einer x-z-Ebene des Fahrzeugkoordinatensystems, wobei die x-Richtung durch die Längsachse und die z-Richtung durch die Hochachse des Fahrzeugs bestimmt wird. Der Sensor misst also sowohl einen Wankratenanteil als auch einen Gierratenanteil, aber keinen Nickratenanteil.

Das Messsignal $\omega$ des Drehratensensors ist in diesem Fall ein Mischsignal aus Wankrate W und Gierrate G und kann wie folgt ausgedrückt werden:

$$\omega = W \cos(\beta) - G \sin(\beta) \qquad\qquad (1)$$

Der vorstehend genannte Nickwinkel β ist ein Winkel um die Querachse des Fahrzeugs und liegt also ebenfalls in einer x-z-Ebene des Fahrzeugkoordinatensystems.

Gemäß der Erfindung darf die Messachse nicht exakt in Richtung der Längsachse (x-Achse) oder der Hochachse des Fahrzeugs (z-Achse) liegen. Der Winkel β darf mit anderen Worten nicht exakt +-0, +-90 oder +-180° betragen.

Es ist nicht nötig, dass sich die Messachse des Sensors mit der Längsachse des Fahrzeugs schneidet. Der Sensor kann also auch seitlich von der Längsachse angeordnet sein.

Im Rahmen der Wankwinkelbestimmung wird die Gierrate G des Fahrzeugs unter Verwendung eines Gierraten-Modells berechnet, das eine Abhängigkeit vom Wankwinkel φ enthält. Die Gierrate G wird also aus anderen Sensorsignalen modellbasiert berechnet und nicht direkt mittels eines Gierratensensors gemessen. Auf diese Weise kann der Gierratenanteil der gemessenen Drehrate w (Gleichung (1)) abgeschätzt werden, und es ist möglich, auf den Wankratenanteil in der gemessen Drehrate ω zu schließen. Die Wankrate kann schließlich zur Bestimmung des Wankwinkels benutzt werden.

Eine besonders einfache Ausführungsform eines Gierraten-Modells ermittelt die Gierrate G in Abhängigkeit von der Längsgeschwindigkeit v und der Querbeschleunigung ay des Fahrzeugs. Hierzu kann beispielsweise folgendes Modell verwendet werden:

$$G = (ay\text{-}g \sin(\varphi))/v \qquad\qquad (2)$$

wobei g die Erdbeschleunigung darstellt. Die Querbeschleunigung ay und die Längsgeschwindigkeit v können in bekannter Weise sensorisch gemessen oder auf anderem Wege ermittelt werden.

Insbesondere bei einem Zweiradfahrzeug ist die Querbeschleunigung ay üblicherweise klein und kann in den meisten Fahrsituationen näherungsweise auf den Wert Null gesetzt werden. In diesem Fall muss nur noch die Längsgeschwindigkeit v ermittelt werden. Durch Berücksichtigung der Querbeschleunigung kann aber die Genauigkeit des Verfahrens verbessert werden.

Wird nun die Gierrate nach Gleichung (2) in Gleichung (1) eingesetzt, kann nach der Wankrate W aufgelöst werden. Durch Integration der Wankrate über die Zeit kann schließlich der Wankwinkel bestimmt werden.

Gemäß einer bevorzugten Ausführungsform der Erfindung wird die Wankrate in einem iterativen Verfahren berechnet, wobei für den Wankwinkel φ zunächst ein Startwert vorgegeben und der Wankwinkel φ dann in einem iterativen Prozess stets aufs Neue ermittelt wird. Bei der iterativen Ermittlung des Wankwinkels φ wird bei jedem Iterationsschritt jeweils der Wankwinkel $\varphi_n$ des vorherigen Iterationsschrittes zur Bestimmung des neuen Werts $\varphi_{n+1}$ als Ausgangspunkt verwendet.

Eine einfache Möglichkeit, um den Wankwinkel φ iterativ zu bestimmen, besteht darin, zum Wert des Wankwinkels $\varphi_n$ aus einem Iterationsschritt n, das Integral der Wankrate W nach der Zeit zu addieren, wobei die Wankrate $W(\varphi_n)$ eine Funktion von $\varphi_n$ ist. Der neue Wert des Wankwinkels $\varphi_{n+1}$ ergibt sich z. B. aus der Gleichung:

$$\varphi_{n+1} = \varphi_n + \int W(\varphi_n)\, dt \qquad\qquad (3)$$

Durch die Abhängigkeit der Wankrate W vom Wankwinkel $W(\varphi_n)$ wird dafür gesorgt, dass ein Offset-Fehler mit jedem Iterationsschritt asymptotisch abklingt. Dies wird dadurch erreicht, dass der Wankwinkel $\varphi_n$ in der funktionalen Abhängigkeit der Wankrate $W(\varphi_n)$ Eingang findet, und dass wenigstens ein vom Wankwinkel abhängiger Term im Ausdruck $\int W(\varphi_n)\, dt$ mit entgegengesetztem Vorzeichen in die Integration eingeht. Der so berechnete Wankwinkel φ ist damit wesentlich genauer und langzeitstabil.

Bei der Ermittlung des Wankwinkels φ kann zusätzlich eine Fahrbahninformation berücksichtigt werden. Die Fahrbahninformation kann beispielweise die Steigung der Fahrbahnebene, oder eine anderen Information sein, die einen Einfluss auf das Rechenergebnis hat. Die Steigung der Fahrbahn kann in bekannter Weise gemessen oder geschätzt werden. Mit Hilfe dieser Information kann die Berechnung des Wankwinkels korrigiert werden. Entsprechendes gilt für den Nickwinkel und die Nickrate des Fahrzeugs, die zur genaueren Bestimmung des Wankwinkels herangezogen werden können.

Das erfindungsgemäße Verfahren kann beispielsweise an einem Zweirad, wie z. B. einem Motorrad, durchgeführt werden.

Ein gemäß der Erfindung aufgebautes System zur Durchführung des Verfahrens umfasst eine Recheneinheit, wie z. B. ein Steuergerät, welche neben allen weiteren in die Berechnung eingehenden Größen ein Signal von einem Drehratensensor empfängt, dessen Messachse gegenüber der Längsachse des Fahrzeugs um einen Nickwinkel β geneigt ist, so dass das Sensorsignal einen Wankraten- und einen Gierratenanteil aufweist. Mit Hilfe eines Rechenalgorithmus wird der Wankwinkel φ schließlich aus dem Drehratensignal berechnet.

Die Erfindung wird nachstehend anhand der beigefügten Zeichnungen beispielhaft näher erläutert. Es zeigen:

Fig. 1     eine schematische Blockdarstellung einer Ausführungsform eines Verfahrens zur Bestimmung der Schräglage eines Fahrzeugs.

Fig. 2     eine mögliche Ausrichtung eines Sensors zur Erfassung einer Drehrate mit einem Wankraten- und einem Gierratenanteil.

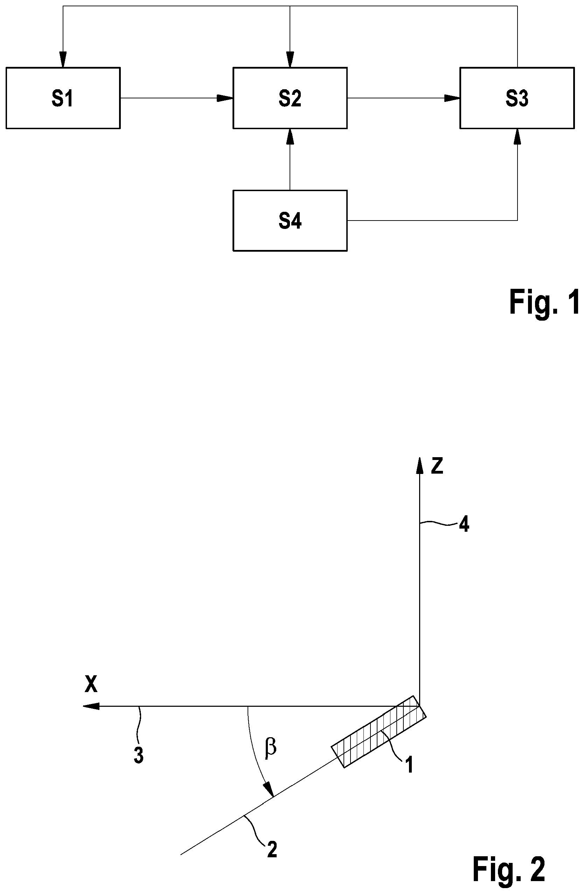

Fig. 1 zeigt eine schematische Blockdarstellung einer Ausführungsform eines Verfahrens zur Bestimmung der Schräglage eines nicht näher dargestellten Fahrzeugs, wie beispielsweise eines Motorrads.

In einem ersten Schritt S1 wird mit einem Drehratensensor 1, wie er in Fig. 2 dargestellt ist, eine Drehrate $\omega$ erfasst. Der Drehratensensor 1 kann z. B. ein piezoelektrischer oder ein mikromechanischer Sensor sein.

Die Messachse 2 des Sensors 1 liegt in einer x-z-Ebene des Fahrzeugkoordinatensystems, wobei die x-Richtung 3 durch die Längsachse und die z-Richtung 4 durch die Hochachse des Motorrads bestimmt wird. Der Sensor misst also sowohl einen Wankratenanteil als auch einen Gierratenanteil, aber keinen Nickratenanteil. Das Messsignal $\omega$ des Drehratensensors 1 ergibt sich bei der dargestellten Anordnung zu:

$$\omega = W \cos (\beta) - G \sin (\beta) \qquad (1)$$

wobei W die Wankrate W und G die Gierrate G des Fahrzeugs ist. Der Winkel $\beta$ ist in diesem Fall der von der Messachse 2 und der x-Achse 3 eingeschlossene Winkel. Er liegt ebenfalls in der x-z-Ebene des Fahrzeugkoordinatensystems und beträgt vorzugsweise etwa 45°. Alternativ kann die Messachse auch in den gegenüberliegenden Quadrant mit einem Winkel von etwa 225° gelegt werden.

In Schritt S2 wird die Gierrate G des Fahrzeugs unter Verwendung eines Gierraten-Modells berechnet, das eine Abhängigkeit vom Wankwinkel $\varphi$ enthält. Hierzu kann beispielsweise folgendes Modell verwendet werden:

$$G = (ay - g \sin(\varphi_n))/v \qquad (2)$$

Dabei sind die Größen ay die Querbeschleunigung und die v die Längsgeschwindigkeit des Fahrzeugs. Die genannten Größen können in bekannter Weise sensorisch gemessen oder auf anderem Wege bestimmt werden. Bei einem Motorrad ist die Querbeschleunigung ay üblicherweise klein und kann in den meisten Fahrsituationen näherungsweise auf den Wert Null gesetzt werden. In diesem Fall muss nur noch die Längsgeschwindigkeit v ermittelt werden. Als Winkel $\varphi_n$ kann im ersten Iterationsschritt ein beliebiger Startwert zwischen -90° und 90°, vorzugsweise 0° gewählt werden.

In einem dritten Schritt S3 wird die modellbasiert berechnete Gierrate G aus Gleichung (2) in Gleichung (1) eingesetzt und nach der Wankrate W aufgelöst. Daraus ergibt sich folgende Beziehung:

$$W = W(\varphi) = v \tan (\beta) (ay - g \sin (\varphi))/v + \omega/\cos(\beta) \qquad (4)$$

Damit ist eine Wankrate als Funktion des Wankwinkels $\varphi$ ermittelt.

Der Wankwinkel kann schließlich in einem iterativen Verfahren berechnet werden:

$$\varphi_{n+1} = \varphi_n + \int W(\varphi_n) \, dt \qquad (3)$$

Wenn der neue Wankwinkel $\varphi_{n+1}$ in Schritt S3 berechnet wurde, wird zum Schritt S1 zurückgekehrt, und es wird eine Drehrate $\omega$ gemessen, mit welcher der nächste Iterationsschritt vollzogen wird. Im Schritt S2 wird dann allerdings der zuletzt im Schritt S3 berechnete Wankwinkel verwendet ($\varphi_n = \varphi_{n+1}$).

Der Wankwinkel ist nach einigen Iterationsschritten unabhängig vom Startwert $\varphi_0$. Dies ist eine Konsequenz daraus, dass W($\varphi$) (siehe Gleichung (4)) einen negativen, von $\varphi$ abhängigen Term enthält. Das Verfahren ist somit langzeitstabil.

Neben den vorstehend beschriebenen Schritten S1 bis S3 kann auch noch ein weiterer Schritt S4 ausgeführt werden. In Schritt S4 werden die Steigung der Fahrbahn und/oder der Nickwinkel und/oder die Nickrate ermittelt. Dies kann z. B. mittels eines Lagesensors, zusätzlicher Beschleunigungssensoren und/oder Drehratensensoren erfolgen.

Die genannten Größen können bei der Berechnung der Wankrate in Schritt S2 oder bei der Bestimmung des Wankwinkels in Schritt S3 berücksichtigt und der Wankwinkel entsprechend korrigiert werden. Somit kann die Schräglage des Motorrads genauer bestimmt werden.

## Patentansprüche

1. Verfahren zur Bestimmung der Schräglage eines Fahrzeugs, wobei mittels eines Sensors (1), dessen Messachse (2) gegenüber der Längsachse des Fahrzeugs (3) um einen Nickwinkel ($\beta$) geneigt ist, eine Drehrate ($\omega$) erfasst wird, die einen Wankraten- und einen Gierratenanteil aufweist, und wobei aus der Drehrate ($\omega$) ein Wankwinkel ($\varphi$) ermittelt wird, wobei die Gierrate (G) des Fahrzeugs unter Verwendung eines Gierraten-Modells berechnet, und die Wankrate (W) in Abhängigkeit von der berechneten Gierrate (G) aus der gemessenen Drehrate ($\omega$) ermittelt wird, **dadurch gekennzeichnet, dass** das Gierraten-Modell eine Abhängigkeit vom Wankwinkel ($\varphi$) enthält.

2. Verfahren nach Anspruch 1, **dadurch gekennzeichnet, dass** das Gierraten-Modell (G) eine Abhängigkeit von der Längsgeschwindigkeit des Fahrzeugs (v) aufweist.

3. Verfahren nach Anspruch 1 oder 2, **dadurch gekennzeichnet, dass** das Gierraten-Modell (G) eine Abhängigkeit von der Querbeschleunigung des Fahrzeugs (ay) aufweist.

4. Verfahren nach einem der vorhergehenden Ansprüche, **dadurch gekennzeichnet, dass** die Drehrate ($\omega$) um eine Messachse (2) erfasst wird, die nicht in Richtung der Längsachse (3) oder der Vertikalachse (4) des Fahrzeugs weist.

5. Verfahren nach einem der vorhergehenden Ansprüche, **dadurch gekennzeichnet, dass** ein Startwert ($\varphi0$) für den Wankwinkel ($\varphi$) vorgegeben und der Wankwinkel ($\varphi$) in einem iterativen Prozess ermittelt wird.

6. Verfahren nach einem der vorhergehenden Ansprüche, **dadurch gekennzeichnet, dass** bei der Ermittlung des Wankwinkels ($\varphi$) eine Information bezüglich der Lage der Fahrbahn und/oder des Nickwinkels des Fahrzeugs berücksichtigt wird.

7. Verfahren nach Anspruch 6, **dadurch gekennzeichnet, dass** eine Information bezüglich der Lage der Fahrbahn und/oder des Nickwinkels des Fahrzeugs aus einem Signal wenigstens eines Beschleunigungssensors und/oder wenigstens eines Raddrehzahlsensors ermittelt wird.

8. Verfahren nach einem der vorhergehenden Ansprüche, **dadurch gekennzeichnet, dass** bei der Ermittlung des Wankwinkels ($\varphi$) eine Information bezüglich der Lageänderung der Fahrbahn und/oder der Nickrate des Fahrzeugs berücksichtigt wird.

9. Verfahren nach Anspruch 8, **dadurch gekennzeichnet, dass** eine Information bezüglich der Lageänderung der Fahrbahn und/oder der Nickrate des Fahrzeugs aus einem Signal wenigstens eines Drehratensensors ermittelt wird.

10. Verwendung des Verfahrens nach einem der vorhergehenden Ansprüche zur Bestimmung der Schräglage eines Zweiradfahrzeugs.

11. Recheneinheit, umfassend Mittel zum Durchführen eines Verfahrens nach einem der Ansprüche 1 bis 9.

## Claims

1. Method for determining the inclined position of a vehicle, wherein a rotational rate ($\omega$) is acquired by means of a sensor (1) whose measuring axis (2) is inclined by a pitch angle ($\beta$) with respect to the longitudinal axis of the vehicle (3), which rotational rate ($\omega$) has a rolling rate component and a yaw rate component, and wherein a rolling angle ($\psi$) is determined from the rotational rate ($\omega$), wherein the yaw rate (G) of the vehicle is calculated using a yaw rate model, and the rolling rate (W) is determined from the measured rotational rate ($\omega$) as a function of the calculated yaw rate (G), **characterized in that** the yaw rate model contains a dependence on the rolling angle ($\psi$).

2. Method according to Claim 1, **characterized in that** the yaw rate model (G) has a dependence on the longitudinal speed of the vehicle (v).

3. Method according to Claim 1 or 2, **characterized in that** the yaw rate model (G) has a dependence on the transverse acceleration of the vehicle (ay).

4. Method according to one of the preceding claims, **characterized in that** the rotational rate (ω) is acquired about a measuring axis (2) which does not point in the direction of the longitudinal axis (3) or the vertical axis (4) of the vehicle.

5. Method according to one of the preceding claims, **characterized in that** a starting value of (ψ0) is predefined for the rolling angle (ψ), and the rolling angle (ψ) is determined in an iterative process.

6. Method according to one of the preceding claims, **characterized in that** when the rolling angle (ψ) is determined, information relating to the position of the underlying surface and/or the pitch angle of the vehicle is taken into account.

7. Method according to Claim 6, **characterized in that** information relating to the position of the underlying surface and/or the pitch angle of the vehicle is determined from a signal of at least one acceleration sensor and/or of at least one wheel rotational speed sensor.

8. Method according to one of the preceding claims, **characterized in that** when the rolling angle (ψ) is determined, information relating to the change in position of the underlying surface and/or the pitch rate of the vehicle is taken into account.

9. Method according to Claim 8, **characterized in that** information relating to the change in position of the underlying surface and/or the pitch rate of the vehicle is determined from a signal of at least one rotational rate sensor.

10. Use of the method according to one of the preceding claims for determining the inclined position of a two-wheeled vehicle.

11. Computing unit comprising means for carrying out a method according to one of Claims 1 to 9.


**Revendications**

1. Procédé de détermination de la position inclinée d'un véhicule, un taux de rotation (ω), qui possède une composante de taux de roulis et une composante de taux de lacet, étant détecté au moyen d'un capteur (1) dont l'axe de mesure (2) est incliné selon un angle d'inclinaison (β) par rapport à l'axe longitudinal du véhicule (3), et
un angle de roulis (φ) étant déterminé à partir du taux de rotation (ω), le taux de lacet (G) du véhicule étant calculé en utilisant un modèle de taux de lacet et le taux de roulis (W) étant déterminé à partir du taux de rotation (ω) en fonction du taux de lacet (G) calculé, **caractérisé en ce que** le modèle de taux de lacet contient une dépendance à l'angle de roulis (φ).

2. Procédé selon la revendication 1, **caractérisé en ce que** le modèle de taux de lacet (G) possède une dépendance à la vitesse longitudinale du véhicule (v).

3. Procédé selon la revendication 1 ou 2, **caractérisé en ce que** le modèle de taux de lacet (G) possède une dépendance à l'accélération transversale du véhicule (ay).

4. Procédé selon l'une des revendications précédentes, **caractérisé en ce que** le taux de rotation (ω) est détecté autour d'un axe de mesure (2) qui n'est pas orienté dans la direction de l'axe longitudinal (3) ou de l'axe vertical (4) du véhicule.

5. Procédé selon l'une des revendications précédentes, **caractérisé en ce qu'**une valeur de départ (φ0) est prédéfinie pour l'angle de roulis (φ) et l'angle de roulis (φ) est déterminé dans un processus itératif.

6. Procédé selon l'une des revendications précédentes, **caractérisé en ce que** lors de la détermination de l'angle de roulis (φ), une information concernant la position de la voie de circulation et/ou de l'angle d'inclinaison du véhicule est prise en compte.

7. Procédé selon la revendication 6, **caractérisé en ce qu'**une information concernant la position de la voie de circulation et/ou de l'angle d'inclinaison du véhicule est déterminée à partir d'un signal d'au moins un capteur d'accélération et/ou d'au moins un capteur de vitesse de rotation de roue.

8. Procédé selon l'une des revendications précédentes, **caractérisé en ce que** lors de la détermination de l'angle de roulis (φ), une information concernant le changement de position de la voie de circulation et/ou du taux d'inclinaison du véhicule est prise en compte.

9. Procédé selon la revendication 8, **caractérisé en ce qu'**une information concernant le changement de position de la voie de circulation et/ou du taux d'inclinaison du véhicule est déterminée à partir d'un signal d'au moins un capteur de vitesse de rotation de roue.

10. Utilisation du procédé selon l'une des revendications précédentes pour déterminer la position inclinée d'un véhicule à deux roues.

11. Unité de calcul comprenant des moyens pour mettre en oeuvre un procédé selon l'une des revendications 1 à 9.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005012456 A1
- DE 102005012458 A1
- DE 102005012456